# EUROPEAN PATENT APPLICATION

(11) **EP 2 239 304 A1**
(43) Date of publication of application: **13.10.2010**
(21) Application number: 08865846.3
(22) Date of filing: 19.12.2008
(51) Int. Cl.: C09B 67/42, C09B 67/20, C09D 11/00, C09D 17/00, D06P 1/44, D06P 1/54, D06P 5/02

(54) **COLORING COMPOSITION**

(30) Priority: 20.12.2007 JP 2007328259
(71) Applicant: Matsui Shikiso Chemical Co., Ltd., Kyoto-shi Kyoto 607-8345 (JP)
(72) Inventor: KITAGAWA, Yosuke, Kyoto-shi Kyoto 607-8345 (JP); SASAKI, Osamu, Kyoto-shi Kyoto 607-8345 (JP); INOUE, Daisuke, Kyoto-shi Kyoto 607-8345 (JP)
(74) Representative: Forstmeyer, Dietmar
(86) International application number: PCT/JP2008/073185
(87) International publication number: WO 2009/081859

(57) **Abstract**

Disclosed is a coloring composition containing (A) a pigment dispersion composed of a pigment having an average particle diameter of 0.1-0.5 µm, a polymer dispersant containing a hydrophobic group and an ionic group as indispensable components and an aqueous medium, and (B) a crosslinking agent. The coloring composition is **characterized in that** a crosslinking reaction is caused between the polymer dispersant and the crosslinking agent at the time of coloring, thereby fixing the pigment onto fibers.

## Description

### [Technical Field]

The present invention relates to coloring compositions.

### [Background Art]

Conventionally, coloring agents used for coloring fibers are either dye or pigment. In cases of coloring with a dye, different dyes (coloring agents) in structures thereof are used for different kinds of fibers; namely, reactive dyes or direct dyes for cellulose fibers such as cotton and hemp, acid dyes for animal fibers such as wool and silk, acid dyes and disperse dyes for nylon fibers, disperse dyes for polyester fibers, and cationic dyes for acrylic fibers.
Depending on the fibers to be colored, these dyes are selected and used for coloring by means of various dyeing processes. These dyeing processes include, for example, a dip dyeing process wherein exhaustion dyeing is performed using a jet dyeing machine or a Wince dyeing machine, a pad dyeing process wherein fibers are immersed in a dye solution dissolved in water, a dyeing process by screen printing on a fiber using a dye solution blended with an aqueous paste, and a coating method using a comma coater.

However, in dyeing with a dye, except for dip dyeing process (which comprises heating treatment in water for a long period of time, then washing with water), a colored fiber is subjected to steam heating (steaming) after dyeing in order to fix the dye, then excessive dye is washed off by a process such as washing with water and soaping. Thus, coloring of a fiber with a dye has problems in equipment-involving, and time- and work-consuming complex process, which also requires a large amount of water, so that it has environmental problems of discharged water, etc. On the other hand, a fabric colored with a dye has soft texture, so that it is well-accepted as clothing products in terms of quality.

In contrast, in coloring with a pigment, the following substance is used as a coloring agent: a pigment as a coloring agent is mixed in water with a dispersant, i.e., a water-soluble anionic or nonionic surfactant having a hydrophilic group and a lipophilic group, then the resulting mixture is finely-dispersed by an attritor or a milling machine together with glass beads, zirconia beads, titania beads, or stainless balls.
This water-dispersed coloring agent is diluted with a reducer containing an emulsion resin for pigment fixation, which is used as a color pigment ink; this ink is printed on a fiber by means of padding, coating or using a screen stencil to fix the pigment, then subjected to dry-heat treatment if necessary, to obtain colored fabric.

Thus, different from coloring methods with dyes, a coloring method with pigments does not require selection of coloring agents depending on the kind of fibers, and its processing method does not require a complex steam-heating (steaming) step or washing step, so that this is a processing method wherein fibers are colored and pigments are fixed in an extremely simple manner.

However, since a large amount of emulsion resin as a fixing agent must be used in the coloring method with pigments in order to maintain fastness such as washing fastness and rubbing fastness of colored fabric, the texture of the colored fabric tend to become stiff, which is inferior to those dyed with dyes in terms of quality as clothing product.
In addition, with respect to workability during coloring process, the following problems arise from drying of an emulsion resin by evaporation of water content: spoiling a machine during padding, contamination of dried membranes and spoiling a machine during coating, occurrence of clogging of stencils and membrane formation during screen printing, or thickening of color pigment inks.

With respect to coloring with pigments, for example, a coloring agent comprising a coloring composition composed of a pigment particle with an average particle diameter of 200 nm or less and a binder polymer particle is known (Patent Literature 1).
This publicly known method aims at, due to the use of fine pigment particles and binder polymer particles, decreasing the thickness of a colored covering layer, maintaining and improving the texture of the fiber structure, and suppressing voids of the covering layer to increase fastness. However, since this method uses fine pigment particles, the method is not so simple and easy because some means should be adopted to prevent re-coagulation of particles and to make them into fine particles during coloring process.

As described above, while coloring with a dye is superior in terms of quality of colored fabric (texture and fastness), it requires selection of a dye depending on the kind of fiber, and has problems in efficiency of process and in facility, as well as consumption of resources.
In contrast, while coloring with a pigment does not require selection of a dye depending on the kind of fiber and its process is simple, it has problems in workability, etc., and the quality (texture) of the resulting colored fabric is often not so excellent.
Accordingly, the development of a process for coloring with a pigment that does not have a problem of workability and provides a colored fabric with superior quality (texture) has been awaited.

### [Citation List]

Patent Literature 1: JP, A, 2006-299018

### [Summary of Invention]

### Technical Problem

An object of the invention is to provide a process for coloring with a pigment that provides a colored fabric with superior quality (texture, etc.) without a problem of workability.

### Solution to Problem

The inventors of the present invention have devoted themselves to the study to solve the above problem, and found that, in coloring a fiber with a pigment, a colored fabric with superior quality can be obtained by crosslinking a polymer dispersant in a pigment dispersing liquid by a crosslinking agent upon coloring, thereby fixing the pigment on the fiber; after further investigation, they completed the present invention.

The present invention is comprised of the following.
1. A coloring composition comprising (A) a pigment dispersion composed of a pigment having an average particle diameter of 0.1-0.5 µm, a polymer dispersant containing a hydrophobic group and an ionic group as indispensable components, and an aqueous medium, and (B) a crosslinking agent, wherein a crosslinking reaction is caused between the polymer dispersant and the crosslinking agent at the time of coloring, thereby fixing the pigment on a fiber.
2. The coloring composition according to the above 1, wherein the blending ratio (by weight) of the pigment to the polymer dispersant is 1.0 : 0.1-2.0.

3. The coloring composition according to the above 1 or 2, wherein the ionic group is an anionic group or a cationic group.
4. The coloring composition according to the above 3, wherein the anionic group is a carboxyl group, a sulfonate group, a sulfonyl group, or a phosphate group.
5. The coloring composition according to the above 3, wherein the cationic group is a primary to tertiary amino group, or a quaternary ammonium base.

6. The coloring composition according to the above 1, 2, 3, 4 or 5, wherein the weight-average molecular weight of the polymer dispersant comprising a hydrophobic group and an ionic group as indispensable components is 2,000-50,000.
7. The coloring composition according to the above 1, 2, 3, 4, 5 or 6, wherein the crosslinking agent is a compound comprising a crosslinking group, selected from oxazoline compound, isocyanate compound, block isocyanate compound, epoxy resin compound, ethyleneurea compound, ethyleneimine compound, melamine compound, organic acid dihydrazide compound, diacetone acrylamide compound, carbodiimide compound, and silane coupling compound.

8. A color ink wherein the pigment dispersion and the crosslinking agent of the coloring composition according to the above 1, 2, 3, 4, 5, 6 or 7 are blended under the presence of a reducer.
9. The color ink according to the above 8, wherein the pigment dispersion and the crosslinking agent according to the above 8 are blended under the presence of one or more of additives consisting of wetting agent, softening agent, or fixing agent.

10. A colored fiber colored with the color ink according to the above 8 or 9.
11. The colored fiber according to the above 10, wherein the colored fiber is subjected to post treatment of overall padding using wax, metal soap, silicone, or emulsion resin after coloring.

The present invention is based on the following findings.

### 1) Problems in a conventional process wherein a pigment is used as a coloring agent

For coloring a fiber with a conventional pigment, a coloring agent, in which a pigment is dispersed in water using a nonionic surfactant or an anionic surfactant as a dispersant, is diluted and blended at an appropriate amount with a reducer and an emulsion resin, and the resulting mixture is used as a color ink; a fiber is colored with the color ink by exhaustion dyeing, padding, coating, orscreen-rollerprinting, thendried, andheat-treatedifnecessary, to give a colored fabric.

However, the following problems existed.

### (Problem 1)

In a conventional pigment dispersant, a nonionic surfactant or an anionic surfactant is generally used; these surfactants inhibit fixation of pigments upon coloration due to their low affinity to fibers; in addition, the surfactant remained on a fiber cloth deteriorates washing fastness and rubbing fastness of the fiber cloth due to its water solubility.

### (Problem 2)

A color ink using a conventional pigment dispersion ensures washing fastness and rubbing fastness of the fiber cloth by using a large amount of emulsion resin for fixation of the pigment. However, the use of a large amount of emulsion resin makes the texture of the fiber cloth stiff and deteriorates the quality.

### (Problem 3)

Regarding the large amount of emulsion resin in a color ink, the emulsion resin is solidified (becomes insoluble to water) by evaporation of the water content in the ink during processing, leading to the following problems: in cases of padding and coating, spoiling a machine, formation of membranes, and deterioration of the quality by attachment of the solidified foreign matters onto the colored fabric; in cases of screen printing and roller printing, clogging of stencils, or thickening of the ink, leading to deterioration of workability.

### (Problem 4)

In order to improve the problem 3 of the workability due to the large amount of emulsion resin, conventionally, the rate of drying is reduced by blending a wetting agent into the color ink. However, the addition of the wetting agent at an amount large enough to solve the problem of workability significantly decreases fastness of the colored fabric, and accordingly, the problem has not yet been solved.

### 2) Solution

It has been found that the above problem can be solved by the following method.

### (Solution 1)

As a pigment dispersant, a polymer dispersant comprising a hydrophobic group and an ionic group is used, and the ionic group in the polymer dispersant is crosslinked by a crosslinking agent upon fixation (coloration) of the pigment, thereby blocking the ionic group that has been hydrophilic. By this, the dispersant becomes insoluble to water and does not cause deterioration of washing fastness and rubbing fastness of a fiber cloth any more, as in the case of a conventional dispersant that uses a surfactant.

### (Solution 2)

By crosslinking the ionic group of the polymer dispersant using the crosslinking agent, the dispersant becomes insoluble to water; moreover, by making the dispersant a larger polymer through making it into a resin, the dispersant will have a function as a fixing agent for pigments. Accordingly, without using a large amount of emulsion resin as in the case of color ink using a conventional pigment dispersion, the inventive composition can ensure washing fastness and rubbing fastness of fiber cloth.
Furthermore, because a large amount of emulsion resin is not used, texture of the fiber cloth does not become stiff, and breathability can be maintained; thus, the colored fabric with a superior quality comparable to that of the colored fabric colored with a dye can be obtained.

### (Solution 3)

The large amount of emulsion resin used in the color ink that uses a conventional pigment dispersion is solidified during the coloring process, thereby adversely affecting the workability in various ways. Since the present invention enables the process without using a large amount of emulsion resin, there is no solidification of resin during coloring, thereby significantly improving the workability.

### (Solution 4)

Since the present invention enables processing without using a large amount of emulsion resin, no wetting agent or only a small amount of wetting agent is necessary to delay the rate of drying of emulsion resin; therefore, there is no adverse effect on fastness of colored fabric.

The coloring composition on the basis of the above solutions of the present invention is the one which comprises a pigment dispersion composed of a pigment, a polymer dispersant containing a hydrophobic group and an ionic group as indispensable components, and an aqueous medium, blended with a crosslinking agent; and wherein upon coloring, the polymer dispersant becomes insoluble to water by crosslinking the ionic group of the polymer dispersant by the crosslinking agent,andthatitsfixation characteristic is increased by further polymerization, thereby fixing the pigment on the fiber. Thus, the colored fiber products manufactured using the coloring composition of the present invention exhibit significant superiority in terms of texture, washing fastness, rubbing fastness, and printing workability.

Thus, the coloring composition of the present invention allows for manufacturing the above-mentioned high-quality colored fiber products by adopting a novel rational means of using the polymer dispersant in terms of two kinds of functions; namely, the polymer dispersant used as a pigment dispersant is also used as a pigment-fixing component by means of its crosslinking with a crosslinking agent.
Thus, the superior effects of the present invention are induced by the synergistic effect of the combination of a polymer dispersant comprising a hydrophobic group and an ionic group as indispensable components with a crosslinking agent. Since the effects of the present invention cannot be achieved when either one of these two agents is lacking, we understand that the selection of the structure of the present invention has a special meaning.

Hereinafter, the present invention is described in detail.
The coloring composition of the present invention is a coloring composition comprising a pigment dispersion composed of a pigment, a polymer dispersant containing a hydrophobic group and an ionic group as indispensable components, and an aqueous medium, as well as a crosslinking agent, wherein a crosslinking reaction is caused between the ionic group of the polymer dispersant and the crosslinking agent upon coloring, thereby fixing the pigment on fibers. Using said coloring composition, high-quality colored fibers can be manufactured.
In the present coloring composition, a pigment dispersion and a crosslinking agent are blended; by blending them under the presence of a reducer, after preparation of the color ink, colored fibers can be efficiently manufactured by coloring fibers with the color ink.

### 1. Coloring composition

The coloring composition of the present invention is characterized by blending (A) a pigment dispersion composed of a pigment and a polymer dispersant as active ingredients, and (B) a crosslinking agent.
The blending ratio (by weight) of the pigment to the polymer dispersant as active ingredients of the pigment dispersion is preferably 1.0 : 0.1-2.0.
In addition, the blending ratio (by weight) of the pigment dispersion to the crosslinking agent is preferably 1: 0. 5 or greater.

### (A) Pigment dispersion

The present pigment dispersion is manufactured from (1) a pigment, (2) a polymer dispersant, and (3) an aqueous medium.

### (1) Pigment

The pigment used in the present invention must be that having an average particle diameter of 0.1-0.5 µm; if this range is not satisfied, the object of the present invention may not be achieved.
As the pigment used in the pigment dispersion of the present invention, any pigments that can be used as coloring agents of fiber products may be used, regardless of organic pigments or inorganic pigments.

Examples include, but not limited to, black pigments such as carbon black and iron oxide black pigment, etc., red pigments such as quinacridone pigment, chromphthal pigment, azo pigment, diketopyrrolopyrrole pigment, anthraquinone pigment, etc., yellow pigments such as azo pigment, imidazolone pigment, titanium yellow pigment, etc., orange pigments such as indanthrene pigment, azo pigment etc., blue pigments such as phthalocyanine pigment, ultramarine, iron blue, etc., green pigments such as phthalocyanine pigment, etc., violet pigments such as dioxazine pigment, quinacridone pigment, etc., white pigments such as titanium oxide, aluminum silicate, silicate oxide, etc.

### (2) Polymer dispersant

The polymer dispersant used in the present invention is a polymer dispersant comprising a hydrophobic group and an ionic group as indispensable components, and has the following characteristics.

### 1) Dispersibility

In a state of pigment dispersion, the polymer dispersant adsorbs onto the surface of the pigment and makes the pigment blend (wet) with water, and prevents the pigment particles triturated by a mechanical action from re-coagulation by means of electrostatic repulsion (repulsive force)orsteric repulsion,therebysuppressing sedimentation.

### 2) Crosslinking property

The polymer dispersant functions as a fixing agent upon crosslinking by the action of a crosslinking agent.

### 3) Molecular weight

A polymer dispersant has a certain molecular weight to exhibit optimal dispersion effect for a pigment, and the molecular weight exceeding the optimal value causes coagulation of the pigment by inducing crosslinking between the pigment particles.
On the other hand, the molecular weight less than the optimal value tends to cause desorption from the pigment, resulting in less effect as a dispersant. In addition, a small molecular weight exhibits less effect as a fixing agent after crosslinking.
Therefore, as the polymer dispersant of the present invention, it is preferable to use those with a weight-average molecular weight of 2,000-50,000.

### 4) Structure (morphology)

The polymer dispersant of the present invention comprises a hydrophobic group (an electrically-neutral nonpolar substance that has low affinity to water) and an ionic group (an electrically-ionic polar substance that has high affinity to water) as indispensable components; its structure may be linear or branched, may be random, alternate, cyclic or block structure, and may be a graft polymer wherein the structure of a trunk and a branch is designed.
The polymer dispersant may be blended with an aqueous medium in a state of aqueous solution, dispersion, or emulsion.
The present invention is **characterized in that** an ionic group is crosslinked by a crosslinking agent; any other groups that are contained in addition to the hydrophobic group and ionic group as the indispensable components may also be crosslinked together with the ionic group.

### 5) Method of formation

The polymer dispersant of the present invention may be manufactured by copolymerization of a hydrophobic-group-containing monomer with an ionic-group-containing monomer. Here, each of the monomers of a single kind may be used, or two or more kinds of the monomers may be used.

Examples of the above hydrophobic-group-containing monomer and the ionic-group-containing monomer include the following.

### (Hydrophobic-group-containing monomer)

Examples of the hydrophobic-group-containing monomer include vinyl monomers such as styrene monomers, phenyl-group-containing (meth)acrylates, alkyl esters of (meth)acrylic acid, alkyl vinyl ethers, (meth)acrylonitriles, etc.; urethane-group-containing vinyl monomers formed from polyisocyanate and polyol or polyamine, etc.; epoxy-group-containing vinyl monomers formed from epichlorophydrin and bisphenol, etc. ; ester-group-containing vinyl monomers formed from multivalent calboxylic acid and polyalcohol monomer; and silicone-group-containing vinyl monomers formed from organopolysiloxane, etc.

Next, ionic groups include anionic groups and cationic groups. Examples of monomers which provide these ionic groups include the following.

### (Anionic-group-containing monomer)

As the anionic-group-containing monomer, the following unsaturated carboxylic acid monomers, unsaturated sulfonic acid monomers, unsaturated phosphoric acid monomers, etc., or anhydrides and salts thereof may be used.
Examples of the unsaturated carboxylic acid monomer include (meth) acrylic acid, crotonic acid, sorbic acid, maleic acid, fumaric acid, itaconic acid, monoalkyl ester of unsaturated dicarboxylic acid, etc., or anhydrides and salts thereof.
Examples of the unsaturated sulfonic acid monomer include styrenesulfonic acid, vinylsulfonic acid, 2-acrylamide-2-methylpropanesulfonic acid, sulfate ester of 2-hydroxyalkyl (meth)acrylate, or salts thereof.
Examples of the unsaturated phosphoric acid monomer include vinylphosphonic acid, phosphate ester of hydroxyalkyl (meth)acrylate (carbon numbers 2-6), and (meth)acrylic acid-alkylphosphonic acid, etc.

### (Cationic-group-containing monomer)

As the cationic-group-containing monomer, the following unsaturated amine-containing monomers and unsaturated ammonium-salt-containing monomers may be used.
Examples of the unsaturated amine-containing monomer include vinylamine, allylamine, vinylpyridine, methyl vinylpyridine, N,N-dialkyl aminostyrene, N,N-dialkyl aminoalkyl (meth)acrylate, dialkyl aminoethyl vinylether, etc.
Examples of the unsaturated ammonium-salt-containing monomer include the above-mentioned unsaturated tertiary amine-containing monomer that has been quaternarized by a quaternarizing agent.

### (Others)

As a method for forming polymer dispersants, in addition to the above-mentioned copolymerization, the following methods such as urethane polymerization of a monomer containing a urethane forming group in which an ionic group is pre-introduced, or epoxy polymerization of a monomer containing an epoxy forming group in which an ionic group is pre-introduced, may also be adopted.
Furthermore, the polymer dispersant of the present invention may be obtained by introducing an ionic group of interest after polymerization of a backbone polymer.

Here, the polymer dispersant of the present invention may comprise other components in addition to the indispensable components of hydrophobic group and ionic group; such examples include copolymerization of monomers without ionic property, such as polyethylene oxide having a hydroxyl group or an amide group, monomers containing polyol or hydroxyalkyl esters, acrylamide, hydroxyalkyl acrylate, vinyl acetate, vinyl alcohol, N-ethyl methacrylamide, N-isopropyl acrylamide, and N-vinylpyrrolidone.

### (3) Aqueous medium

As the aqueous medium used in the present invention, water and water-soluble organic solvents, etc. may be used.
Examples of water-soluble organic solvent include methanol, ethanol, n-propanol, iso-propanol, n-butanol, iso-butanol, t-butanol, trimethylol propane, ethylene glycol, diethylene glycol, triethylene glycol,polyethylene glycol,propylene glycol, butylene glycol, 1,2,6-hexanetriol, thioglycol, hexylene glycol, glycerin, diglycerin, 2-pyrrolidone, N-methyl-2-pyrrolidone, 1,5-pentanediol, ethylene glycol monoethyl ether, ethylene glycol monobuthyl ether, etc.

### (4) Preparation of pigment dispersion

A pigment dispersion can be obtained by mixing the above (1) pigment, (2) polymer dispersant, and (3) aqueous medium, and processing the mixture by a milling disperser using glass beads, zirconia beads and titania beads; the average particle diameter of the pigment dispersion is preferably 0.1-0.5 µm, because superior coloring concentration, sharpness and fastness can be obtained. Those having an average particle diameter of less than 0.1 µm require a long period of time for dispersion, possibly causing problems of deterioration of workability due to coagulation of pigment, and reduction of the coloring concentration; those having an average particle diameter of 0.5 µm or greater are not preferable because they have poor coloring concentration, resulting in a coloring agent without sharpness and poor fastness of the colored fabric.

Moreover, in the pigment dispersions, a glycol solvent as a wetting agent such as ethylene glycol, propylene glycol, diethylene glycol, glycerin, polyethylene glycol, etc. as well as urea, hyaluronic acid and sucrose may be added if necessary.
Other than those mentioned above, nonionic surfactant or anionic surfactant as a dispersion aid may be added; however, it is not preferable to add a large amount of these surfactants because they deteriorate the function of the pigment dispersion of the present invention.

### (B) Crosslinking agent

The crosslinking agent used in the present invention aims to generate the function as a fixing agent of pigments, by crosslinking the ionic group of the polymer dispersant (as a pigment dispersant) containing the hydrophobic group and ionic group, thereby blocking the hydrophilic ionic group and causing the polymer dispersant to become a water-insoluble large resin-like polymer.

As described above, because the hydrophilic ionic group of the dispersant is made to be hydrophobic by crosslinking, water resistance of the dispersant improves and it does not deteriorate washing fastness and rubbing fastness of the fiber cloth as in the case wherein conventional surfactant is used; thus the dispersant comes to have a function as a fixing agent, so that fixation of the pigment becomes possible without using a large amount of emulsion resin as in the case of color ink using conventional pigment dispersion, while ensuring washing fastness and rubbing fastness of the fiber cloth.
Therefore, by not using a large amount of emulsion resin, a high-quality colored fabric that has a soft texture of fiber cloth with good breathability can be obtained.

As the crosslinking agent, a compound that comprises a crosslinking group, selected from oxazoline compound, isocyanate compound, block isocyanate compound, epoxy resin compound, ethylene urea compound, ethylene imine compound, melamine compound, organic-acid dihydrazide compound, diacetone acrylamide, carbodiimide, and silane coupling agent, may be used without particular limitation. A plurality of these crosslinking agents may be co-used.

Here, the crosslinking agent is blended immediately before coloring process, because hardening of the crosslinking agent in the color ink gradually proceeds due to its reactivity; that is, so-called pot life should be considered. However, regarding the crosslinking agent in which a functional group is blocked or protected, it does not harden in the ink, so that the agent can be pre-blended in an undermentioned reducer.

### 2. Color ink

A color ink is an ink to color fibers; it can be obtained by blending the above-described coloring composition with an undermentioned reducer.

### (1) Reducer

It is not possible to color a fiber with the coloring composition of the present invention directly, due to the concentration and viscosity of the pigment. Therefore, the coloring composition should be diluted with a reducer having a viscosity that corresponds to the processing method to produce the color ink with a pigment concentration suitable for the processing method.
The reducer used in the present invention refers to an aqueous diluent, and both of terpene reducers containing terpene and terpeneless reducers without terpene may be used.

A terpene reducer is made by emulsifying water and terpene using a nonionic surfactant into a paste-like state; reducers having various types of viscosity properties and various degrees of viscosity can be obtained depending on the processing method, by changing the kind of nonionic surfactant and changing the ratio of water to terpene.
As a terpeneless reducer, those made by dissolving a water-soluble paste such as carboxymethyl cellulose, hydroxyl ethyl cellulose, methyl cellulose and algin into water, or those made from optionally diluting an alkali-soluble crosslinked acrylic resin or an alkali-thickened acrylate polymer, etc. with water into a paste-like state can be used; depending on the kind and concentration of materials, reducers having various viscosity properties and various degrees of viscosity can be obtained. For terpeneless reducers, it is preferable to use a resin-type thickener rather than a water-soluble paste, from the viewpoint of fastness of colored fabric.

### (2) Preparation of color ink

The viscosity properties and the degree of viscosity of a color ink should be adjusted in accordance with the processing method. In general, they are adjusted to be 100-1,000 mPa/s for padding process, 1,000-5,000 mPa/s for roller printing, 3, 000-100, 000 mPa/s for screen printing, 1,000-5,000mPa/s for knife coating. Generally, these values of viscosity can be achieved by pre-adjusting the viscosity of the reducer.
The amount of the coloring composition relative to the amount of the color ink is, preferably, 0.1-20% by weight, although it may vary depending on the pigment concentration of the coloring composition and the ink concentration required.

In the color ink, the undermentioned additives, etc. may be appropriately blended. Blending is performed by pre-mixture into the reducer, or addition into the color ink afterwards.

### 1) Fixing agent

Blending of a small amount of emulsion resin as a fixing agent can improve fastness.
Since the pigment is fixed by crosslinking of the dispersant of the invention, it is not necessary to blend a large amount of emulsion resin as in the case of conventional pigment ink; from the viewpoints of quality of colored fabric and workability, the blending ratio of 10% or more by weight relative to that of the color ink is not preferable; the ratio is preferably maintained at the smallest possible amount in order to ensure fastness.
As the resin emulsion blended as a fixing agent, the following may be used without particular limitation: acrylic acid ester resin emulsion, urethane resin emulsion, EVA resin emulsion, silicone/acrylic resin emulsion, polyester rein emulsion, etc. To soften the texture of the colored fabric, the glass transition point of these emulsion resins is preferably 0°C or less.

### 2) Wetting agent

To improve workability upon coloring, if necessary, a hydrophilic solvent or urea may be blended as a wetting agent to delay drying of the ink.
Examples of the hydrophilic solvent include ethylene glycol, diethylene glycol, propylene glycol, glycerin, polyethylene glycol, etc.
The color ink of the present invention does not require a large amount of resin emulsion as a fixing agent; accordingly, the wetting agent can achieve the object at an amount smaller than that required with the conventional pigment inks.

### 3) Plasticizer

To obtain more soft texture of colored fabric, a plasticizer may be added. As the plasticizer, silicone oil, aromatic esters, aliphatic esters, mineral oil, plant oil, animal oil, and paraffin may be used without limitation. Since a large amount of resin emulsion has been blended as a fixing agent in conventional pigment coloring, the texture of the colored fabric is stiff, so that a large amount of plasticizer has been added in the color ink to soften the texture.
In contrast, in coloring of the present invention, because a large amount of resin emulsion is not necessary as a fixing agent, the texture of the colored fabric is soft; to achieve more soft texture, addition of a small amount of a plasticizer may provide a colored fabric having a quality comparable to that achieved by coloring with dyes.

### 4) Others

In general, various additives that are publicly known and commonly used for color inks may be added, which include for example, waxes and metallic soaps for the improvement of slip property, silicone oil, ultra-violet-ray absorbers and antioxidizing agents for the improvement of light fastness, ammonia water, amines, organic acid, inorganic acid for pH adjustment, penetrating agents for the improvement of the penetration property into fibers, and hardening catalyst for the promotion of hardening.

### 3. Processing for coloring

### (1) Coloring process

As a process for coloring in order to color fibers, there are the following processes: padding process wherein a fiber is immersed in a color ink and wringed by a mangle, then the ink is fixed by drying; roller printing wherein a fiber is colored with a color ink using an engraved plate, then the ink is fixed by drying; screen printing wherein a fiber is screen-printed with a color ink using a screen stencil, then the ink is fixed by drying.

Regarding the screen printing, processing machines include automatic screen printer, manual screen printer, rotary printer, circular automatic printer, elliptical automatic printer, etc.

In addition, there is a coating process wherein a fiber is entirely coated with a color ink, then the ink is fixed by drying; as the coating machine, knife coater, wire coater, and comma coater are used.

With an exhaustion dyeing process, a cellulose fiber is pre-treated with a cationization agent, then the pigment dispersion of the present invention is ion-adsorbed onto the fiber; as the dyeing machine, paddle dyeing machine, drum dyeing machine, Wince dyeing machine and jet dyeing machine may be used.
Here, the coloring process is not limited to those described herein. Any processes in which coloring fibers using the coloring composition of the present invention is possible may be adopted.

### (2) Heat treatment

With a colored fabric in which the fiber is colored using a color ink, the polymer dispersant of the coloring composition is subj ected to hardening by crosslinking with a crosslinking agent. The crosslinking reaction gradually proceeds after drying of the colored fabric even under room temperature, but in order to promote hardening by crosslinking, heat treatment is preferably carried out; usually, a heat treatment at 100°C-180°C for 3-10 min may achieve this object.

### (3) Post treatment

The colored fabric may be subjected to padding with a post-treatment agent on its entire surface to realize the colored fabric having improved texture softness and fastness (in particular, rubbing fastness).
Examples of post-treatment agent aiming at softening include cationic-, anionic-, nonionic-surfactants, dimethyl silicone oil, amino silicone oil, carboxy-modified silicone oil, hydroxy-modified silicone oil, fatty acid, fatty acid amide, mineral oil, plant oil, animal oil, and plasticizer, etc.

Examples of post-treatment agent aiming at improving the slip property of the surface of the colored fiber include metallic soap, paraffin wax, carnauba wax, microcrystalline wax, dimethyl silicone oil, amino silicone oil, carboxy-modified silicone oil, hydroxy-modified silicone oil, etc.

Padding treatment is carried out as follows: the above post-treatment agent is emulsified, heat-emulsified, or dispersed into a water solvent by stirring with a mixer, into which a colored fabric is immersed and wringed by a mangle and dried, then subj ected to heat treatment.

In addition, by blending a small amount of resin emulsion as a fixing agent into the post-treatment agent, rubbing fastness of the colored fabric can be improved. Its blending ratio relative to the post-treatment agent is preferably less than 5%; when the resin emulsion is blended with 5% or more, then the soft texture of the colored fabric is deteriorated, which is not preferred.
The resin emulsion used as a fixing agent and blended in the post-treatment agent is not particularly limited, and acrylic acid ester resin emulsion, urethane resin emulsion, EVA resin emulsion, silicone/acrylic resin emulsion, and polyester resin emulsion may be used. In order to soften the texture of the colored fabric, the glass transition point of these resin emulsions is preferably 0°C or lower.

### 4. Fiber product

Fiber products to which the coloring composition (ink) of the present invention canbe applied include the following. Examples of fabric (kind of fiber) include synthetic fibers such as nylon, polyester, acrylonitrile, etc., semi-synthetic fibers such as acetate and rayon, etc., natural fibers such as cotton, silk, wool, etc., and their mixed fibers, woven fabric, knitted product, non-woven fabric, etc.
Examples of clothing include T-shirt, sweat shirt, jersey, pant, sweat suit, one-piece suit, bedclothes, handkerchief, blouse, etc.

### [Advantageous Effects of Invention]

Colored fiber products manufactured using the coloring composition of the present invention exhibit superior effects in terms of any properties including texture, washing fastness, rubbing fastness, and printing workability; thus, the inventive coloring composition is of high value.

### [Description of Embodiments]

Hereinafter, the present invention is described in further detail with reference to Examples; however, the present invention is not limited thereto. Here, "parts" referred to in Examples means "parts by weight" unless stated otherwise.

### (Example 1)

### <Preparation of pigment dispersion>

25 Parts of an organic azo red pigment (C. I. Pigment Red 150), 25 parts of a polymer dispersant with a weight-average molecular weight of 8,500 having a carboxyl group as ionic group and a phenyl group as hydrophobic group (Joncryl 62: BASF Japan Ltd.), 5 parts of propylene glycol, and 45 parts of water were mixed and dispersed by an attritor (0.6-mm-diamater glass beads, a batch-type disperser) for 48 hr to give a 0.285-µm red pigment dispersion 1.

### <Preparation of reducer>

95 Parts of water and 2.5 parts of a polyacrylic resin thickener (Alkoprint PTF: Ciba) were homogenously mixed by stirring to give a terpeneless reducer (reducer 1).

### <Preparation of color ink>

5 Parts of the above red pigment dispersion 1, 95 parts of the above reducer 1, and 3 parts of a block isocyanate crosslinking agent (Fixer N: Matsui Shikiso Chemical Co., Ltd.) were blended, to give a screen printing color ink 1.

### <Coloring process>

The above screen printing color ink is manually printed on a cotton knitted fabric using a 100-mesh dot-pattern screen stencil, dried at 100°C by a drier, then subjected to heat treatment at 130°C for 3 min, to give a red dot-patterned colored fabric.

### (Example 2)

### <Preparation of pigment dispersion>

25 Parts of an organic azo red pigment (C. I. Pigment Red 150) , 25 parts of a polymer dispersant with a weight-average molecular weight of 16, 500 having a carboxyl group as ionic group and a phenyl group as hydrophobic group (Joncryl HPD96: BASF Japan Ltd.), 5 parts of propylene glycol, and 45 parts of water were mixed and dispersed by a beads mill (0.3-mm-diamater zirconia beads, a continuous-type disperser) for 3 hr to give a 0.238-µm red pigment dispersion 2.

### <Preparation of color ink>

Using the same procedure as in Example 1 except that the above redpigment dispersion 2 was used instead of the redpigment dispersion 1 in Example 1, a screen printing color ink 2 was obtained.

### <Coloring process>

Using the same procedure as in Example 1 except that the above color ink 2 was used instead of the color ink 1 in Example 1, a red dot-patterned colored fabric was obtained.

### (Example 3)

### <Preparation of pigment dispersion>

Using the same procedure as in Example 1 of the preparation of the pigment dispersion 1, except that the dispersing time by an attritor was shortened to 24 hr then dispersion was performed by a beads mill (0.1-mm-diamater zirconia beads, a continuous-type disperser) for 2 hr, a 0.185-µm red pigment dispersion 3 was obtained.

### <Preparation of color ink>

Using the same procedure as in Example 1 except that the above redpigment dispersion 3 was used instead of the red pigment dispersion 1 in Example 1, a screen printing color ink 3 was obtained.

### <Coloring process>

Using the same procedure as in Example 1 except that the above color ink 3 was used instead of the color ink 1 in Example 1, a red dot-patterned colored fabric was obtained.

### (Example 4)

### <Preparation of pigment dispersion>

25 Parts of an organic azo red pigment (C. I. Pigment Red 150), 10 parts of a polymer dispersant with a weight-average molecular weight of 8, 500 having a carboxyl group as ionic group and a phenyl group as hydrophobic group (Joncryl 62: BASF Japan Ltd.), 15 parts of a polymer dispersant with a weight-average molecular weight of 10, 000 having a carboxyl group as ionic group and a saturated polyester group as hydrophobic group (Pesresin A-210: Takamatsu Oil&Fat Co., Ltd.), 5 parts of propylene glycol, and 45 parts of water were mixed and dispersed by an attritor (0.6-mm-diamater glass beads, a batch-type disperser) for 48 hr to give a 0.296-µm red pigment dispersion 4.

### <Preparation of color ink>

Using the same procedure as in Example 1 except that the above redpigment dispersion 4 was used instead of the redpigment dispersion 1 in Example 1, a screen printing color ink 4 was obtained.

### <Coloring process>

Using the same procedure as in Example 1 except that the above color ink 4 was used instead of the color ink 1 in Example 1, a red dot-patterned colored fabric was obtained.

### (Example 5)

### <Preparation of pigment dispersion>

25 Parts of an organic azo red pigment (C. I. Pigment Red 150), 10 parts of a polymer dispersant with a weight-average molecular weight of 8,500 having a carboxyl group as ionic group and a phenyl group as hydrophobic group (Joncryl 62: BASF Japan Ltd.), 15 parts of a polymer dispersant with a weight-average molecular weight of 5,500 having a carboxyl group as ionic group and a urethane group as hydrophobic group (Flex 300: Dai-ichi Kogyo Seiyaku Co., Ltd.), 5 parts of propylene glycol, and 45 parts of water were mixed and dispersed by an attritor (0.5-mm-diamater glass beads, a batch-type disperser) for 48 hr to give a 0.256-µm red pigment dispersion 5.

### <Preparation of color ink>

Using the same procedure as in Example 1 except that the above red pigment dispersion 5 was used instead of the redpigment dispersion 1 in Example 1, a screen printing color ink 4 was obtained.

### <Coloring process>

Using the same procedure as in Example 1 except that the above color ink 5 was used instead of the color ink 1 in Example 1, a red dot-patterned colored fabric was obtained.

### (Example 6)

### <Preparation of reducer>

95 Parts of water, 2.5 parts of a polyacrylic resin thickener (Alkoprint PTF: Ciba), and 3 parts of acetyl tributyl citrate (ATBC: citrate plasticizer) were homogenously mixed by stirring to give a terpeneless reducer (reducer 2).

### <Preparation of color ink>

Using the same procedure as in Example 1 except that the above reducer 2 was used instead of the reducer 1 in Example 1, a screen printing color ink 6 was obtained.

### <Coloring process>

Using the same procedure as in Example 1 except that the above color ink 6 was used instead of the color ink 1 in Example 1, a red dot-patterned colored fabric was obtained.

### (Example 7)

### <Preparation of color ink>

Using the same procedure as in Example 1 except that the reducer 2 of Example 6 was used instead of the reducer 1 in Example 1, and that an ethylene imine crosslinking agent (Fixer F: Matsui Shikiso Chemical Co., Ltd.) was used instead of the crosslinking agent Fixer N in Example 1, a screen printing color ink 7 was obtained.

### <Coloring process>

Using the same procedure as in Example 1 except that the above color ink 7 was used instead of the color ink 1 in Example 1, a red dot-patterned colored fabric was obtained.

### (Example 8)

### <Preparation of color ink>

Using the same procedure as in Example 1 except that the amount of 95 parts of the reducer 1 in Example 1 was reduced to 92 parts, and that 3 parts of an acrylic resin emulsion (Matsuminsol MR50: Matsui Shikiso Chemical Co., Ltd.) as a fixing agent was blended, a screen printing color ink 8 was obtained.

### <Coloring process>

Using the same procedure as in Example 1 except that the above color ink 8 was used instead of the color ink 1 in Example 1, a red dot-patterned colored fabric was obtained.

### (Example 9)

### <Preparation of color ink>

Using the same procedure as in Example 1 except that the reducer 2 of Example 6 was used instead of the reducer 1 in Example 1, and that 3 parts of Matsuminsol MR50 as a fixing agent was blended, a screen printing color ink 9 was obtained.

### <Coloring process>

Using the same procedure as in Example 1 except that the above color ink 9 was used instead of the color ink 1 in Example 1, a red dot-patterned colored fabric was obtained.

### (Example 10)

### <Preparation of color ink>

Using the same procedure as in Example 1 except that the amount of 95 parts of the reducer 1 in Example 1 was reduced to 90 parts, and that 5 parts of ethylene glycol as a wetting agent was blended, a screen printing color ink 10 was obtained.

### <Coloring process>

Using the same procedure as in Example 1 except that the above color ink 10 was used instead of the color ink 1 in Example 1, a red dot-patterned colored fabric was obtained.

### (Example 11)

### <Preparation of reducer>

55 Parts of water, 3 parts of a nonionic surfactant (Emalgen 905: Kao Corporation), 2 parts of a nonionic surfactant (Emacol R-600: Matsui Shikiso Chemical Co., Ltd.), and 45 parts of terpene were homogenouslymixedby stirring to give a terpene reducer (reducer 3).

### <Preparation of color ink>

Using the same procedure as in Example 1 except that the above reducer 3 was used instead of the reducer 1 in Example 1, a screen printing color ink 11 was obtained.

### <Coloring process>

Using the same procedure as in Example 1 except that the above color ink 11 was used instead of the color ink 1 in Example 1, a red dot-patterned colored fabric was obtained.

### (Example 12)

### <Preparation of post-treatment agent>

5 Parts of silicone emulsion (Wacker Finish CT-14: Wacker Asahikasei Silicone Co., Ltd.) and 95 parts of water were homogenously mixed with stirring, to give a post-treatment agent 1.

### <Post treatment>

The color ink 6 was prepared, and processed (manually printed on a cotton knitted fabric using a 100-mesh dot-pattern screen stencil) in accordance with Example 6, then the above post-treatment agent 1 was padded and immediately the colored fabric was wringed with a pick-up rate of 70% using a mangle, dried by a drier at 100°C, then heat-treated at 130°C for 3 min, to give a red dot-patterned colored fabric.

### (Example 13)

### <Preparation of post-treatment agent>

5 Parts of Wacker Finish CT-14, 3 parts of Matsuminsol MR50 (fixing agent) and 92 parts of water were homogenously mixed with stirring, to give a post-treatment agent 2.

### <Preparation of color ink, processing by screen printing, post-treatment>

The color ink 7 was prepared and processed (manually printed on a cotton knitted fabric using a 100-mesh dot-pattern screen stencil) in accordance with Example 7, then the above post-treatment agent 2 was padded and immediately the colored fabric was wringed with a pick-up rate of 70% using a mangle, dried by a drier at 100°C, then heat-treated at 130°C for 3 min, to give a red dot-patterned colored fabric.

### (Example 14)

The color ink 9 was prepared and processed (manually printed on a cotton knitted fabric using a 100-mesh dot-pattern screen stencil) in accordance with Example 9, then the post-treatment agent 2 used in Example 13 was padded and immediately the colored fabric was wringed with a pick-up rate of 70% using a mangle, dried by a drier at 100°C, then heat-treated at 130°C for 3 min, to give a red dot-patterned colored fabric.

### (Comparative example 1)

### <Preparation of pigment dispersion>

25 Parts of an organic azo red pigment (C. I. Pigment Red 150), 15 parts of a nonionic surfactant (Emalgen 911: Kao Corporation), 5 parts of propylene glycol, and 55 parts of water were mixed and dispersed by an attritor (0.6-mm-diamater glass beads, a batch-type disperser) for 48 hr to give a 0.305-µm red pigment dispersion 6.

### <Preparation of color ink>

Using the same procedure as in Example 1 except that the above redpigment dispersion 6 was used instead of the red pigment dispersion 1 in Example 1, a screen printing color ink 12 was obtained.

### <Coloring process>

Using the same procedure as in Example 1 except that the above color ink 12 was used instead of the color ink 1 in Example 1, a red dot-patterned colored fabric was obtained.

### (Comparative example 2)

### <Preparation of pigment dispersion>

25 Parts of an organic azo red pigment (C. I. Pigment Red 150), 18 parts of an anionic surfactant (Hitenol N-17: Dai-ichi Kogyo Seiyaku Co., Ltd.), 5 parts of propylene glycol, and 52 parts of water were mixed and dispersed by an attritor (0.6-mm-diamater glass beads, a batch-type disperser) for 48 hr to give a 0.298-µm red pigment dispersion 7.

### <Preparation of color ink>

Using the same procedure as in Example 1 except that the above red pigment dispersion 7 was used instead of the red pigment dispersion 1 in Example 1, a screen printing color ink 13 was obtained.

### <Coloring process>

Using the same procedure as in Example 1 except that the above color ink 13 was used instead of the color ink 1 in Example 1, a red dot-patterned colored fabric was obtained.

### (Comparative example 3)

### <Preparation of color ink>

Using the same procedure as in Example 1 except that 3 parts of the block isocyanate crosslinking agent (Fixer N) in example 1 was not blended, a screen printing color ink 14 was obtained.

### <Coloring process>

Using the same procedure as in Example 1 except that the above color ink 14 was used instead of the color ink 1 in Example 1, a red dot-patterned colored fabric was obtained.

### (Comparative example 4)

### <Preparation of color ink>

Using the same procedure as in Comparative example 1 except that the amount of 95 parts of the reducer 1 in Comparative example 1 was reduced to 65 parts, and that 30 parts of an acrylic resin emulsion (Matsuminsol MR50) as a fixing agent was blended, a screen printing color ink 15 was obtained.

### <Coloring process>

Using the same procedure as in Example 1 except that the above color ink 15 was used instead of the color ink 1 in Example 1, a red dot-patterned colored fabric was obtained.

### (Comparative example 5)

### <Preparation of color ink>

5 Parts of the red pigment dispersion in Comparative example 2, 65 parts of the reducer 2 in Example 6, 30 parts of an acrylic resin emulsion (Matsuminsol MR50) as a fixing agent, and 3 parts of a block isocyanate crosslinking agent (Fixer N) were blended to give a screen printing color ink 16.

### <Coloring process>

Using the same procedure as in Example 1 except that the above color ink 16 was used instead of the color ink 1 in Example 1, a red dot-patterned colored fabric was obtained.

### (Comparative example 6)

### <Preparation of pigment dispersion>

Using the same procedure as in Example 1 of the preparation of the pigment dispersion 1, except that the dispersing time by an attritor was shortened to 20 hr, a 0.623-µm red pigment dispersion 8 was obtained.

### <Preparation of color ink>

Using the same procedure as in Example 1 except that the above redpigment dispersion 8 was used instead of the red pigment dispersion 1 in Example 1, a screen printing color ink 17 was obtained.

### <Coloring process>

Using the same procedure as in Example 1 except that the above color ink 17 was used instead of the color ink 1 in Example 1, a red dot-patterned colored fabric was obtained.

### (Reference example 1)

### <Preparation of color ink>

5 Parts of a red reactive dye (C.I. Reactive Red 120), 5 parts of carboxymethyl cellulose (FINE GUM LV-2: Dai-ichi Kogyo Seiyaku Co., Ltd.), 5 parts of ethylene glycol, 3 parts of sodium bicarbonate, and 82 parts of water were mixed to give a screen printing color ink 18.

### <Coloring process>

The above screen printing color ink 18 is manually printed on a cotton knitted fabric using a 100-mesh dot-pattern screen stencil, dried by a drier at 100°C, then subjected to heat treatment at 100°C for 15 min, washed with water and treated with soaping, to give a red dot-patterned colored fabric.

Evaluation of the above-described examples, comparative examples, and reference examples was shown in Tables 1-6 below. The evaluation of the colored fabrics was carried out using the following methods.
*Printing workability: Evaluation relative to that printed with a dye (Reference example 1) as 100
*Texture: Evaluation by hand feeling (evaluation relative to that of untreated fabric as 100)
*Washing fastness: Evaluation by the method of JIS L-1029 103 for 5 times (5 grade method)
*Rubbing fastness: Evaluation by JIS L-0829 GAKUSHIN-type rubbing test (5 grade method)
*Particle size: Measured by a particle size distribution analyzer (HORIBA LA-700)

**[Table 1-1]**

| | | Example 1 | Example 2 | Example 3 | Example 4 | |
|---|---|---|---|---|---|---|
| | | Pigment dispersion 1 | Pigment dispersion 2 | Pigment dispersion 3 | Pigment dispersion 4 | |
| | Pigment | Pigment Red 150 | Same as on the left | Same as on the left | Same as on the left | |
| Pigment | | 25 parts | | | | |
| dispersion | Dispersant | Joncryl 62 | Joncryl HPD96 | Joncryl 62 | ①Joncryl 62 | |
| | | 25 parts | 25 parts | 25 parts | | |
| | | | | | | 10 parts |
| | | | | | ②PESRESIN A-210 | |
| | | | | | | 15 parts |
| | | | | | ① | ② |
| | Ionic group | Carboxyl group | Carboxyl group | Carboxyl group | Carboxyl group | Same as on the left |
| | Hydrophobic group | Phenyl group | Phenyl group | Phenyl group | Phenyl group | Saturated polyester group |
| | Molecular weight | 8500 | 16500 | 8500 | 8500 | 10000 |
| | Aqueous medium | | | | | |
| | Water | Water 45 parts | Same as on the left | Same as on the left | Same as on the left | |
| | Organic solvent | Propylene glycol | | | | |
| | | 5 parts | | | | |
| | Particle size | 0.285 µm | 0.238 µm | 0.185 µm | 0.296 µm | |

**[Table 1-2]**

| | | | | | | | | | |
|---|---|---|---|---|---|---|---|---|---|
| | | Reducer 1 | | | | | | | |
| | Terpene | | | | | | | | |
| | Water | Water | 95 parts | | | | | | |
| Reducer | Thickener | Alkoprint PTF | | Same as on the left | | Same as on the left | | Same as on the left | |
| | | | 2.5 parts | | | | | | |
| | Plasticizer | | | | | | | | |
| | Nonionic surfactant | | | | | | | | |
| | | Color ink 1 | | Color ink 2 | | Color ink 3 | | Color ink 4 | |
| | Pigment dispersion | Pigment dispersion 1 | | Pigment dispersion 2 | | Pigment dispersion 3 | | Pigment dispersion 4 | |
| | | | 5 parts | | 5 parts | | 5 parts | | 5 parts |
| Color ink | Reducer | Reducer 1 | 95 parts | Reducer 1 | 95 parts | Reducer 1 | 95 parts | Reducer 1 | 95 parts |
| | Crosslinking agent | Fixer N | 3 parts | Fixer N | 3 parts | Fixer N | 3 parts | Fixer N | 3 parts |
| | Fixing agent | | | | | | | | |
| | Wetting agent | | | | | | | | |
| | | | | | | | | | |
| | Post-treatment agent | | | | | | | | |
| Post treatment | | | | | | | | | |
| | | | | | | | | | |
| | Texture | 80 | | 80 | | 80 | | 80 | |
| | Printing workability | 90 | | 90 | | 90 | | 90 | |
| Colored fiber | Washing fastness | | 3-4 | | 3-4 | | 4 | | 3-4 |
| | Rubbing fastness(dry) | | 3 | | 3 | | 3-4 | | 3 |
| | Rubbing fastness(wet) | | 2-3 | | 2-3 | | 3 | | 2-3 |

**[Table 2-1]**

| | | | | | | | |
|---|---|---|---|---|---|---|---|
| | | Example 5 | | Example 6 | | Example 7 | Example 8 |
| | | Pigment dispersion 5 | | Pigment dispersion 1 | | Pigment dispersion 1 | Pigment dispersion 1 |
| | Pigment | Pigment Red 150 | | Same as on the left | | Same as on the left | Same as on the left |
| Pigment | | | 25 parts | | | | |
| dispersion | Dispersant | | | Joncryl 62 | | | |
| | | ①Joncryl 62 | | | 25 parts | | |
| | | | 10 parts | | | | |
| | | ②Flex 300 | | | | | |
| | | | 15 parts | | | | |
| | | ① | ② | | | Same as on the left | Same as on the left |
| | Ionic group | Carboxyl group | Same as on the left | Carboxyl group | | | |
| | Hydrophobic group | Phenyl group | Urethane group | Phenyl group | | | |
| | Molecular weight | 8500 | 5500 | 8500 | | | |
| | Aqueous medium | | | | | | |
| | Water | Water | 45 parts | Water | 45 parts | Same as on the left | Same as on the left |
| | Organic solvent | Propylene glycol | | Propylene glycol | | | |
| | | | 5 parts | | 5 parts | | |
| | Particle size | 0.256 µm | | 0.285 µm | | Same as on the left | Same as on the left |

**[Table 2-2]**

| | | | | | | | | | |
|---|---|---|---|---|---|---|---|---|---|
| | | Reducer 1 | | Reducer 2 | | | | Reducer 1 | |
| | Terpene | | | | | | | | |
| | Water | Water 95 parts | | Water | 95 parts | | | Water | 95 parts |
| Reducer | Thickener | Alkoprint PTF | | Alkoprint PTF | | Same as on the left | | Alkoprint PTF | |
| | | 2.5 parts | | | 2.5 parts | | | | 2.5 parts |
| | Plasticizer | | | ATBC | 3 parts | | | | |
| | Nonionic surfactant | | | | | | | | |
| | | | | | | | | | |
| | | Color ink 5 | | Color ink 6 | | Color ink 7 | | Color ink 8 | |
| | Pigment dispersion | Pigment dispersion 5 | | Pigment dispersion 1 | | Pigment dispersion 1 | | Pigment dispersion 1 | |
| | | | 5 parts | | 5 parts | | 5 parts | | 5 parts |
| Color ink | Reducer | Reducer 1 | 95 parts | Reducer 2 | 95 parts | Reducer 2 | 95 parts | Reducer 1 | 92 parts |
| | Crosslinking agent | Fixer N | 3 parts | Fixer N | 3 parts | Fixer | 3 parts | Fixer F | 3 parts |
| | Fixing agent | | | | | | | Matsuminsol MR50 | |
| | | | | | | | | | 3 parts |
| | Wetting agent | | | | | | | | |
| | | | | | | | | | |
| | Post-treatment agent | | | | | | | | |
| Post treatment | | | | | | | | | |
| | | | | | | | | | |
| | Texture | 80 | | 90 | | 90 | | 70 | |
| | Printing workability | 90 | | 90 | | 90 | | 80 | |
| Colored fiber | Washing fastness | | 3-4 | | 3-4 | | 4 | | 4 |
| | Rubbing fastness(dry) | | 3 | | 2-3 | | 3 | | 3-4 |
| | Rubbing fastness(wet) | | 2-3 | | 2 | | 2-3 | | 3 |

**[Table 3-1]**

| | | Example 9 | | Example 10 | Example 11 | Example 12 |
|---|---|---|---|---|---|---|
| | | Pigment dispersion 1 | | Pigment dispersion 1 | Pigment dispersion 1 | Pigment dispersion 1 |
| | Pigment | Pigment Red 150 | | Same as on the left | Same as on the left | Same as on the left |
| Pigment | | | 25 parts | | | |
| dispersion | | | | | | |
| | Polymer dispersant | Joncryl 62 | 25 parts | | | |
| | Ionic group Hydrophobic group Molecular weight | Carboxyl group Phenyl group 8500 | | Same as on the left | Same as on the left | Same as on the left |
| | Aqueous medium | | | Same as on the left | Same as on the left | Same as on the left |
| | Water | Water | 45 parts | | | |
| | Organic solvent | Propylene glycol | | | | |
| | | | 5 parts | | | |
| | Particle size | 0.285 µm | | Same as on the left | Same as on the left | Same as on the left |

**[Table 3-2]**

| | | | | | | | | | |
|---|---|---|---|---|---|---|---|---|---|
| | | Reducer 2 | | Reducer 1 | | Reducer 3 | | Reducer 2 | |
| | Terpene | | | | | Terpene | 45 parts | | |
| | Water | Water | 95 parts | Water | 95 parts | Water | 55 parts | Water | 95 parts |
| Reducer | Thickener | Alkoprint PTF | | Alkoprint PTF | | | | Alkoprint PTF | |
| | | | 2.5 parts | | 2.5 parts | | | | 2.5 parts |
| | Plasticizer | ATBC | 3 parts | | | | | ATB | 3 parts |
| | Nonionic surfactant | | | | | Emalgen 905 | 3 parts | | |
| | | | | | | Emacol R-600 | 2 parts | | |
| | | | | | | | | | |
| | | Color ink 9 | | Color ink 10 | | Color ink 11 | | Color ink | 6 |
| | Pigment dispersion | Pigment dispersion 1 | | Pigment dispersion 1 | | Pigment dispersion 1 | | Pigment dispersion 1 | |
| | | | 5 parts | | 5 parts | | 5 parts | | 5 parts |
| Color ink | Reducer | Reducer 2 | 92 parts | Reducer 1 | 90 parts | Reducer 3 | 95 parts | Reducer 2 | 95 parts |
| | Crosslinking agent | Fixer N | 3 parts | Fixer N | 3 parts | Fixer N | 3 parts | Fixer N | 3 parts |
| | Fixing agent | Matsuminsol MR50 | | | | | | | |
| | | | 3 parts | | | | | | |
| | Wetting agent | | | Ethylene glycol | 5 parts | | | | |
| | | | | | | | | Post-treatment agent | |
| | Post-treatment agent | | | | | | | 1 | |
| Post treatment | | | | | | | | Water | 95 parts |
| | | | | | | | | Wacker Finish CT-14 | |
| | | | | | | | | | 5 parts |
| | Texture | 80 | | 80 | | 80 | | 100 | |
| | Printing workability | 80 | | 100 | | 90 | | 90 | |
| Color fiber | Washing fastness | | 4 | | 3-4 | | 3 | | 4 |
| | Rubbing fastness(dry) | | 3-4 | | 3 | | 2-3 | | 4 |
| | Rubbing fastness(wet) | | 3 | | 2-3 | | 2 | | 3-4 |

**[Table 4]**

| | | Example 13 | | Example 14 | |
|---|---|---|---|---|---|
| | | Pigment dispersion 1 | | Pigment dispersion 1 | |
| | | | | | |
| | Pigment | Pigment Red 150: | 25 parts | Same as on the left | |
| Pigment | | | | | |
| dispersion | | | | | |
| | Dispersant | Joncryl 62 | 25 parts | | |
| | | | | | |
| | Ionic group | Carboxyl group | | Same as on the left | |
| | Hydrophobic group | Phenyl group | | | |
| | Molecular weight | 8500 | | | |
| | | | | | |
| | Aqueous medium | | | | |
| | Water | Water | 45 parts | Same as on the left | |
| | Organic solvent | Propylene glycol | 5 parts | | |
| | | | | | |
| | Particle size | 0.285 µm | | Same as on the left | |
| | | Reducer 2 | | | |
| | Terpene | | | | |
| | Water | Water | 95 parts | | |
| Reducer | Thickener | Alkoprint PTF | 2.5 parts | Same as on the left | |
| | Plasticizer | ATBC | 3 parts | | |
| | Nonionic surfactant | | | | |
| | | | | | |
| | | Color ink 7 | | Color ink 9 | |
| | Pigment dispersion | Pigment dispersion 1 | 5 parts | Pigment dispersion 1 | 5 parts |
| Color ink | Reducer | Reducer 2 | 92 parts | Reducer 2 | 92 parts |
| | Crosslinking agent | Fixer F | 3 parts | Fixer N | 3 parts |
| | Fixing agent | | | Matsuminsol MR50 | 3 parts |
| | Wetting agent | | | | |
| | | Post-treatment agent 2 | | | |
| Post- | Post-treatment agent | Water | 92 parts | Same as on the left | |
| treatment | | Wacker Finish CT-14 | 5 parts | | |
| | | Matsuminsol MR50 | 3 parts | | |
| | Texture | 90 | | 90 | |
| | Printing workability | 90 | | 80 | |
| Colored fiber | Washing fastness | | 4-5 | | 5 |
| | Rubbing fastness(dry) | | 4-5 | | 4-5 |
| | Rubbing fastness(wet) | | 4 | | 4 |

**[Table 5-1]**

| | | Comparative example 1 | | Comparative example 2 | | Comparative example 3 | | Comparative example 4 | |
|---|---|---|---|---|---|---|---|---|---|
| | | Pigment dispersion 6 | | Pigment dispersion 7 | | Pigment dispersion 1 | | Pigment dispersion 6 | |
| | Pigment | Pigment Red 150 | | Same as on the left | | Same as on the left | | Same as on the left | |
| Pigment dispersion | | | 25 parts | | | | | | |
| | Polymer dispersant | Nonionic surfactant | | Anionic surfactant | | Joncryl 62 | 25 parts | Nonionic surfactant | |
| | | Emalgen 911 | 15 parts | Hiteno1N17 | 18 parts | | | Emalgen 911 15 | parts |
| | | | | | | | | | |
| | Ionic group | | | Sulfate ester group | | Carboxyl group | | | |
| | Hydrophobic group | Alkyl group | | Alkyl group | | Phenyl group | | Alkyl group | |
| | Molecular weight | 700 | | 1300 | | 8500 | | 700 | |
| | Aqueous medium | | | | | | | | |
| | Water | Water | 55 parts | Water | 52 parts | Water | 45 parts | Water | 55 parts |
| | Organic solvent | Propylene glycol | | Propylene glycol | | Propylene glycol | | Propylene glycol | |
| | | | 5 parts | | 5 parts | | 5 parts | | 5 parts |
| | Particle size | 0.305 µm | | 0.298 µm | | 0.285 µm | | 0.305 µm | |

**[Table 5-2]**

| | | | | | | | | | |
|---|---|---|---|---|---|---|---|---|---|
| | | Reducer 1 | | | | | | Reducer | |
| | Terpene | | | | | | | | |
| | Water | Water | 95 parts | | | | | Water | 95 parts |
| Reducer | Thickener | Alkoprint PTF | | Same as on the left | | Same as on the left | | Alkoprint PTF | |
| | | | 2.5 parts | | | | | | 2.5 parts |
| | Plasticizer | | | | | | | | |
| | Nonionic surfactant | | | | | | | | |
| | | Color ink 12 | | Color ink 13 | | Color ink 14 | | Color ink 15 | |
| | Pigment dispersion | Pigment dispersion 6 | | Pigment dispersion 7 | | Pigment dispersion 1 | | Pigment dispersion 6 | |
| | | | 5 parts | | 5 parts | | 5 parts | | 5 parts |
| Color ink | Reducer | Reducer 1 | 65 parts | Reducer 1 | 95 parts | Reducer 1 | 95 parts | Reducer 1 | 95 parts |
| | Crosslinking agent | Fixer N | 3 parts | Fixer N | 3 parts | | | Fixer N | 3 parts |
| | Fixing agent | | | | | | | Matsuminsol MR50 | |
| | | | | | | | | | 30 parts |
| | Wetting agent | | | | | | | | |
| | | | | | | | | | |
| Post treatment | Post-treatment agent | | | | | | | | |
| | | | | | | | | | |
| | Texture | 80 | | 80 | | 80 | | 30 | |
| | Printing workability | 90 | | 90 | | 90 | | 20 | |
| Colored fiber | Washing fastness | | 1 | | 1 | | 1 | | 4 |
| | Rubbing fastness(dry) | | 1-2 | | 1-2 | | 1-2 | | 3-4 |
| | Rubbing fastness(wet) | | 1 | | 1 | | 1 | | 3 |

**[Table 6]**

| | | Comparative example 5 | | Comparative example 6 | |
|---|---|---|---|---|---|
| | | Pigment dispersion 7 | | Pigment dispersion 8 | |
| | Pigment | Pigment Red 150 | | Same as on the left | |
| | | | 25 parts | | |
| | | | | | |
| Pigment | Dispersant | Anionic surfactant | | Joncryl 62 | 25 parts |
| dispersion | | Hitenol N17 | 18 parts | | |
| | Ionic group | Sulfate ester group | | Carboxyl group | |
| | Hydrophobic group | Alkyl group | | Phenyl group | |
| | Molecular weight | 1300 | | 8500 | |
| | | | | | |
| | Aqueous medium | | | | |
| | Water | Water | 52 parts | Water | 45 parts |
| | Organic solvent | Propylene glycol | 5 parts | Propylene glycol | 5 parts |
| | Particle size | 0.298 µm | | 0.623 µm | |
| | | | | | |
| | | Reducer 2 | | Reducer 1 | |
| | Terpene | | | | |
| Reducer | Water | Water | 95 parts | Water | 95 parts |
| | Thickener | Alkoprint PTF | 2.5 parts | Alkoprint PTF | 2.5 parts |
| | Plasticizer | ATBC | 3 parts | | |
| | Nonionic surfactant | | | | |
| | | Color ink 16 | | Color ink 17 | |
| | Pigment dispersion | Pigment dispersion 7 | | Pigment dispersion 8 | |
| | Reducer | | 5 parts | | 5 parts |
| Color ink | Crosslinking agent | Reducer 2 | 65 parts | Reducer 1 | 95 parts |
| | Fixing agent | Fixer N | 3 parts | Fixer N | 3 parts |
| | Wetting agent | Matsuminsol MR50 | | | |
| | | | 30 parts | | |
| | | | | | |
| Post-treatment | Post-treatment agent | | | | |
| | | | | | |
| | Texture | 40 | | 80 | |
| | Printing workability | 20 | | 80 | |
| Colored fiber | Washing fastness | | 4 | | 3 |
| | Rubbing fastness(dry) | | 3-4 | | 2 |
| | Rubbing fastness(wet) | | 3 | | 2 |

The results of Reference example 1 are as follows.
Texture: 100
Printing workability: 100
Washing fastness: 4
Rubbing fastness (dry): 4
Rubbing fastness (wet): 3

From the above results shown in Tables 1-6, the following findings are obtained.
(1) When a conventional low-molecular surfactant is used as a pigment dispersant instead of the polymer dispersant of the present invention, while texture and printing workability are good, washing fastness and rubbing fastness deteriorate (Comparative examples 1 and 2).
(2) In the above case, when a usual resin fixing agent is used as a fixing agent at its general amount, while washing fastness and rubbing fastness improve, texture becomes stiff and workability deteriorates (Comparative examples 4 and 5).

(3) When a crosslinking agent is not reacted to the polymer dispersant of the present invention, sufficient fastness cannot be obtained (Comparative example 3)
(4) When the particle size of the pigment dispersed by the polymer dispersant of the present invention is out of the range of the present invention, while printing workability and texture improve, fastness deteriorates (Comparative example 6).

(5) By means of the technology to crosslink a coloring pigment dispersion dispersed using the polymer dispersant of the present invention with a crosslinking agent, a fiber cloth with a soft texture comparable to that of a colored fabric colored with a dye can be obtained. In addition, clogging of screen gauze and thickening of the ink during screen printing are prevented, so that printing workability is good, and a colored fabric with superior fastness (to washing and rubbing) can be obtained.

### (Examples 1-14, Reference example 1)

As mentioned above, combined use of the inventive polymer dispersant containing a hydrophobic group and an ionic group as indispensable components with a crosslinking agent is shown to be of particular significance.

### [Industrial Applicability]

Using the coloring composition of the present invention, it becomespossibleto manufacture colored fiber products with excellent quality; thus the inventive composition is of significant value.

## Claims

1. A coloring composition comprising (A) a pigment dispersion composed of a pigment having an average particle diameter of 0.1-0.5 µm, a polymer dispersant containing a hydrophobic group and an ionic group as indispensable components, and an aqueous medium, and (B) a crosslinking agent, wherein a crosslinking reaction is caused between the polymer dispersant and the crosslinking agent at the time of coloring, thereby fixing the pigment on a fiber.

2. The coloring composition according to Claim 1, wherein the blending ratio (by weight) of the pigment to the polymer dispersant is 1.0 : 0.1-2.0.

3. The coloring composition according to Claim 1 or 2, wherein the ionic group is an anionic group or a cationic group.

4. The coloring composition according to Claim 3, wherein the anionic group is a carboxyl group, a sulfonate group, a sulfonyl group, or a phosphate group.

5. The coloring composition according to Claim 3, wherein the cationic group is a primary to tertiary amino group, or a quaternary ammonium base.

6. The coloring composition according to any one of Claims 1, 2, 3, 4 and 5, wherein the weight-average molecular weight of the polymer dispersant comprising a hydrophobic group and an ionic group as indispensable components is 2,000-50,000.

7. The coloring composition according to any one of Claims 1, 2, 3, 4, 5 and 6, wherein the crosslinking agent is a compound comprising a crosslinking group, selected from oxazoline compound, isocyanate compound, block isocyanate compound, epoxy resin compound, ethyleneurea compound, ethyleneimine compound, melamine compound, organic acid dihydrazide compound, diacetone acrylamide compound, carbodiimide compound, and silane coupling compound.

8. A color ink wherein the pigment dispersion and the crosslinking agent of the coloring composition according to any one of Claims 1, 2, 3, 4, 5, 6 and 7 are blended under the presence of a reducer.

9. The color ink according to Claim 8, wherein the pigment dispersion and the crosslinking agent are blended under the presence of one or more of additives consisting of wetting agent, softening agent, or fixing agent.

10. A colored fiber colored using the color ink according to Claim 8 or 9.

11. The colored fiber according to Claim 10, wherein the colored fiber is subjected to post treatment of overall padding using wax, metal soap, silicone, or emulsion resin after coloring.
